# EUROPEAN PATENT SPECIFICATION

(11) **EP 2 530 827 B1**
(45) Date of publication and mention of the grant of the patent: **13.03.2019**
(21) Application number: 12169985.4
(22) Date of filing: 30.05.2012
(51) Int. Cl.: H02P 8/14, H02P 21/00

(54) **Control device, actuator system, and control method**
Steuervorrichtung, Aktuatorsystem und Steuerverfahren
Dispositif de commande, système d'actionneur et procédé de commande

(30) Priority: 30.05.2011 JP 2011120835
(43) Date of publication of application: 05.12.2012
(73) Proprietor: IAI Corporation, Shizuoka 424-0103 (JP)
(72) Inventor: Masuda, Takahiro, Shizuoka, Shizuoka 424-0103 (JP); Yamada, Akihiro, Shizuoka, Shizuoka 424-0103 (JP)
(74) Representative: Epping - Hermann - Fischer

(56) References cited:
- EP-A1- 0 032 020
- DE-A1- 4 242 067
- JP-A- 2006 345 668
- US-A1- 2002 008 487
- US-A1- 2005 259 482

## Description

This application relates to a control device, actuator system, and control method.

Industrial robots contributing to automatization of various tasks generally have an actuator. The actuator is provided with, for example, a stepping motor as the drive source. Stepping motors are relatively inexpensive and characteristically yield large torque in a range of low rotation speeds. Therefore, actuators provided with a stepping motor are suitable for tasks with which this characteristic is useful. On the other hand, tremendous back electromotive force causes the torque of stepping motors to significantly diminish in a high rotation speed range.

Recently, techniques for ameliorating the diminution in torque have been proposed (for example, see Unexamined Japanese Patent Application Kokai Publication No. 2004-320847 and Unexamined Japanese Patent Application Kokai Publication No. 2009-089560). The control device disclosed in the Unexamined Japanese Patent Application Kokai Publication No. 2004-320847 conducts moderate field current control to alleviate influence of the back electromotive force occurring in a stepping motor when the motor output of the stepping motor satisfies given conditions. On the other hand, the drive device disclosed in the Unexamined Japanese Patent Application Kokai Publication No. 2009-089560 controls the voltage applied to a stepping motor using PWM (pulse width modulation) signals of a constant current control circuit so as to alleviate influence of the back electromotive force.

However, the control device disclosed in the Unexamined Japanese Patent Application Kokai Publication No. 2004-320847 yields limited improvement in torque. The drive device disclosed in the Unexamined Japanese Patent Application Kokai Publication No. 2009-089560 controls the voltage in accordance with the duty ratio of PWM signals. However, the duty ratio is constant at and above a given rotation speed. Then, influence of the back electromotive force cannot be suppressed in high rotation speed. Document JP 2006345668 A discloses a motor drive unit to drive a stepping motor driven by a low-voltage power supply at high speed. A control circuit of the drive unit generates a voltage command of a command value corresponding to a frequency of a command pulse input signal when the stepping motor is driven at high speed. The drive unit further comprises a step-up converter which boosts power supply voltages on the basis of the command value.

In document DE 4242067 A1 a control system for an automobile throttle setting device is described which provides a required position value used to control a stepping motor via-setting
motor model. According to an embodiment the stepping motor is controlled with a symmetrised run-up and braking to provide the position adjustment corresponding to a rapid variation in the required position value, with the position variation rate held constant over a wide variation range.

Document US 2002/008487 A1 discloses a motor-controlling circuit for an optical-axis-adjusting unit of an illuminating device. The motor-controlling circuit enables smooth control of a motor, which adjusts an optical axis, and ensures accurate repetition of a motor-stop position by way of PID and PWM control. Thereby, the motor-controlling circuit includes a motor and a position detecting portion. Feedback control is performed whereby an error between the motor's present position information, and the target value of position control, becomes zero.

In document US 2005/259482 A1 an actuator driving circuit is described which is capable of preventing itself from overheating without interrupting the operation of a boosting circuit. The actuator driving circuit is configured for driving an electromagnetic actuator and includes a boosting circuit which boosts a source voltage. The actuator driving circuit further comprises a boosted voltage controller which is connected to an output terminal of the boosting circuit to control a boosted voltage generated by the boosting circuit.

The present invention is invented in view of the above problems and an exemplary object of the present invention is to provide a control device, actuator system, and control method efficiently preventing diminution in the torque of a stepping motor in a high rotation speed range.

In order to achieve the above objective, the control device 20 of the present invention according to claim 1 comprises:
a driver 50 supplying drive signals for driving a stepping motor 32 to the stepping motor 32;
an arithmetic operator 21 computing a boosted voltage of the drive signals according to an output state of the stepping motor 32; and
a booster 22 boosting the drive signals based on the boosted voltage computed by the arithmetic operator 21.

Furthermore, the arithmetic operator 21 computes the boosted voltage of the drive signals based on a target rotation speed value of the stepping motor 32.

Furthermore, the arithmetic operator 21 computes the boosted voltage of the drive signals based on a detected rotation speed value of the stepping motor 32.

Furthermore, the control device 20 comprises a dynamic model creator 219 calculating a rotation speed of the stepping motor 32 predicted by a dynamic model of a mechanical system including the stepping motor 32, wherein:
the arithmetic operator 21 computes the boosted voltage of the drive signals based on the rotation speed of the stepping motor calculated by the dynamic model creator 219.

Furthermore, the arithmetic operator 21 computes the boosted voltage of the drive signals based on a deviation between a target rotation angle value of the stepping motor 32 and a detected rotation angle value of the stepping motor 32.

Furthermore, the arithmetic operator 21 designates a voltage selected from multiple voltages raised in a stepwise fashion in proportion to increase in the rotation speed of the stepping motor 32 as a boosted voltage of the drive signals.

Furthermore, the arithmetic operator 21 computes the boosted voltage of the drive signals when an output state of the stepping motor 32 exceeds a given threshold.

Furthermore, the booster 22 boosts the drive signals to a preset voltage.

Furthermore, the control device 20 comprises a moderate field controller 216 executing control to moderate a field current of the drive signals in a range exceeding a maximum acceptable frequency range of the stepping motor 32.

The actuator system 10 of the present invention comprises a stepping motor 32 and the control device 20 according to any one of the above controlling the stepping motor 32.

The control method of the present invention according to claim 7 is a method of controlling the boosted voltage of drive signals for driving a stepping motor 32, wherein the boosted voltage of the drive signals is computed according to an output state of the stepping motor 32 (S200) and the drive signals are boosted based on a computed boosted voltage (S300).

The present invention can boost the voltage applied to a stepping motor according to the rotation state of the stepping motor. Consequently, the torque of the stepping motor can efficiently be improved in a high rotation speed range.

A more complete understanding of this application can be obtained when the following detailed description is considered in conjunction with the following drawings, in which:
FIG. 1 is an illustration showing the appearance of an actuator system according to Embodiment 1;
FIG. 2 is a block diagram showing the configuration of a control device and linear actuator constituting the actuator system shown in FIG. 1;
FIG. 3 is a graphical representation for explaining a moderate field current calculated from a target motor output value;
FIG. 4 is an illustration showing the coordinate transformation from the current on a rotating coordinate system to the current on the coordinate system at rest;
FIG. 5 is a circuit diagram showing the configuration of the booster circuit;
FIG. 6 is a flowchart showing the procedure of the control device;
FIG. 7 is a flowchart showing the current control procedure by the moderate field compensator and coordinate transformer;
FIG. 8 is a flowchart showing the boosting procedure by the boost command processing part and booster circuit;
FIG. 9 is a graphical representation showing the relationship between the target rotation speed value and motor power supply voltage;
FIG. 10 is a circuit diagram showing the configuration of the booster circuit according to Embodiment 2;
FIG. 11 is a flowchart showing the boosting procedure by the boost command processing part and booster circuit;
FIG. 12 is a graphical representation showing the relationship between the target rotation speed value and motor power supply voltage;
FIG. 13 is a block diagram showing the configuration of a control device and linear actuator constituting an actuator system according to Embodiment 3;
FIG. 14 is a flowchart showing the boosting procedure by the boost command processing part and booster circuit;
FIG. 15 is a block diagram showing the configuration of a control device and linear actuator constituting an actuator system in which the boost command processing part is replaced with a boost command processing circuit;
FIG. 16 is a block diagram showing the configuration of a control device and linear actuator constituting an actuator system according to Embodiment 4;
FIG. 17 is a flowchart showing the boosting procedure by the dynamic model creation part, boost command processing part, and booster circuit;
FIG. 18 is a block diagram showing the configuration of a control device and linear actuator constituting an actuator system according to Embodiment 5;
FIG. 19 is a graphical representation showing the relationship between the rotation angle deviation and the rotation speed;
FIG. 20 is a flowchart showing the boosting procedure by the boost command processing part and booster circuit;
FIG. 21 is a graphical representation showing the relationship between the absolute value of rotation angle deviation and the motor power supply voltage; and
FIG. 22 is a flowchart showing a method at the control device.

Embodiments of the present invention will be described in detail hereafter with reference to the drawings.

### (Embodiment 1)

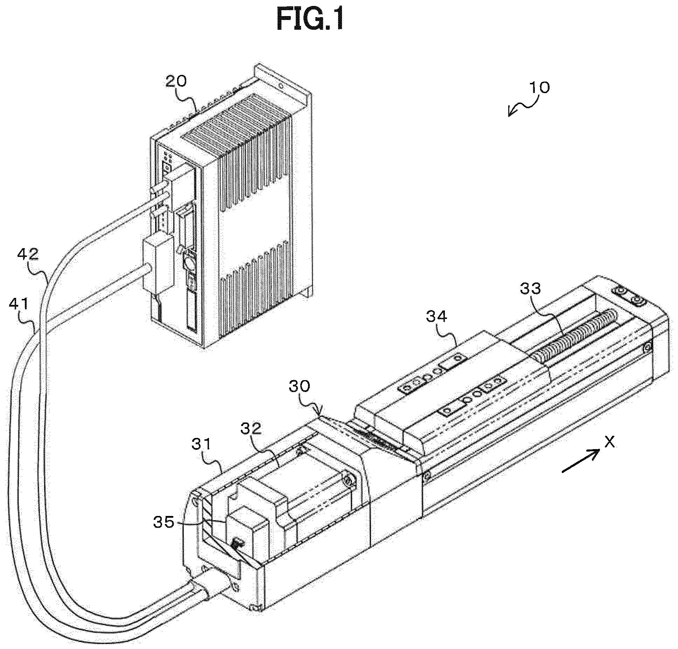

FIG. 1 shows the appearance of an actuator system 10 according to Embodiment 1. As shown in FIG. 1, the actuator system 10 comprises a control device 20, a linear actuator 30, a motor cable 41, and an encoder cable 42.

The linear actuator 30 comprises a housing 31, a stepping motor 32, a ball screw 33, a slider 34, and an encoder 35.

The housing 31 is a hollow member protecting the members therein. The housing 31 houses the stepping motor 32, ball screw 33, and encoder 35.

The rotation shaft of the stepping motor 32 is coupled to the ball screw 33. The stepping motor 32 rotates the ball screw 33 in accordance with the pulse power input from the control device 20 via the motor cable 41. Consequently, the slider 34 moves in the X-axis direction. The position of the slider 34 is proportional to the rotation angle of the stepping motor 32. For example, the slider 34 is at its closest position to the stepping motor 32 as shown in FIG. 1 when the rotation angle is 0°. From this state, the slider 34 moves in the X-axis direction by 2 cm as the stepping motor rotates to a rotation angle of 720°.

The encoder 35 is, for example, a magnetic rotary encoder. The encoder 35 detects the rotation angle and rotation speed of the stepping motor 32. The encoder 35 outputs signals indicating the detected rotation angle and rotation speed values to the control device 20 via the encoder cable 42. The encoder 35 is not restricted to the magnetic type and can be an encoder of optical or other types.

The control device 20 supplies pulse power to the stepping motor 32 so as to rotate the stepping motor 32 to a given rotation angle. The control device 20 acquires the detected rotation angle and rotation speed values of the stepping motor 32 from the encoder 35 via the encoder cable 42.

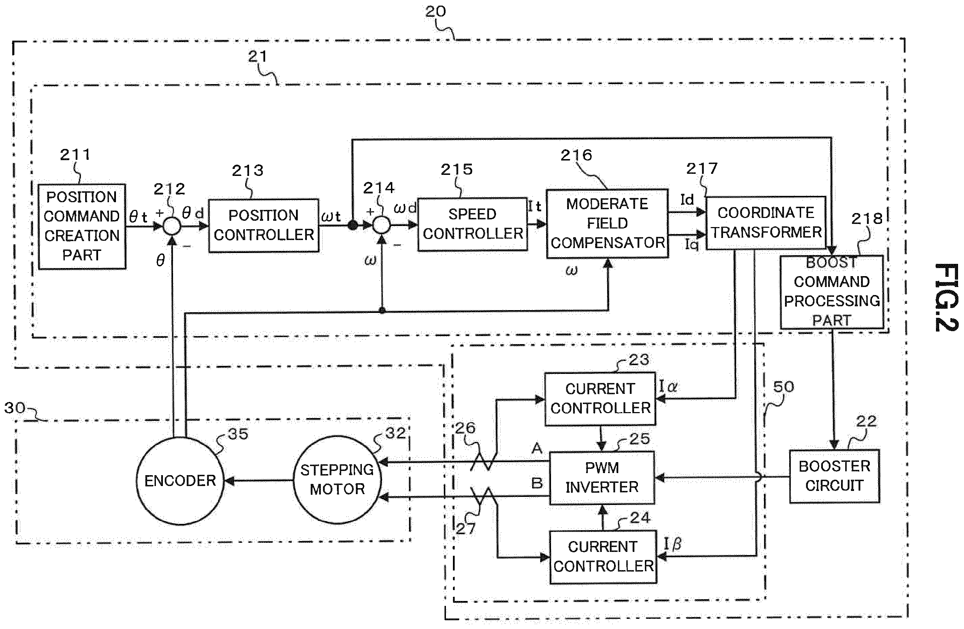

The function of the control device 20 will be described using FIG. 2. FIG. 2 is a block diagram showing the control device 20 and linear actuator 30 constituting the actuator system 10 shown in FIG. 1. As shown in FIG. 2, the control device 20 comprises an arithmetic operation part 21, a booster circuit 22 and a driver 50.

The arithmetic operation part 21 executes programs using a CPU (central processing unit), RAM (random access memory), storage, etc. as resources to conduct various procedures. The arithmetic operation part 21 is composed of a position command creation part 211, a first subtracter 212, a position controller 213, a second subtracter 214, a speed controller 215, a moderate field compensator 216, a coordinate transformer 217, and a boost command processing part 218.

The position command creation part 211 creates a position command signal indicating a target rotation angle value θt of the stepping motor 32 according to the executed programs. The position command creation part 211 outputs the created signal to the first subtracter 212. The position command creation part 211 can acquire a target value θt from outside the arithmetic operation part 21. For example, the position command creation part 211 can acquire a value entered by the user into the control device 20.

The first subtracter 212 calculates the deviation θd between the target rotation angle value θt output from the position command creation part 211 and the detected rotation angle value θ detected by the encoder 35. The first subtracter 212 outputs a signal indicating the deviation θd to the position controller 213.

The position controller 213 calculates a target rotation speed value ωt based on the deviation θd output from the first subtracter 212. The position controller 213 outputs a signal indicating the target value ωt to the second subtracter 214 and boost command processing part 218.

The second subtracter 214 calculates the deviation ωd between the target rotation speed value ωt output from the position controller 213 and the detected rotation speed value ω detected by the encoder 35. The second subtracter 214 outputs a signal indicating the deviation ωd to the speed controller 215.

The speed controller 215 calculates a target value It and target duty ratio and pulse cycle values of the pulse current to be supplied to the stepping motor 32. The speed controller 215 outputs signals indicating the calculated target value It and the like to the moderate field compensator 216.

The moderate field compensator 216 calculates a d-axis current Id and a q-axis current Iq on the rotating coordinate system based on the target pulse current value It output from the speed controller 215. The moderate field compensator 216 calculates a target motor output value Pt based on the target value It and detected rotation speed value ω. The moderate field compensator 216 employs the d-axis current Id as the moderate field current when the target value Pt satisfies given conditions so as to execute moderate field current control. The moderate field compensator 216 outputs signals indicating the currents Id and Iq to the coordinate transformer 217.

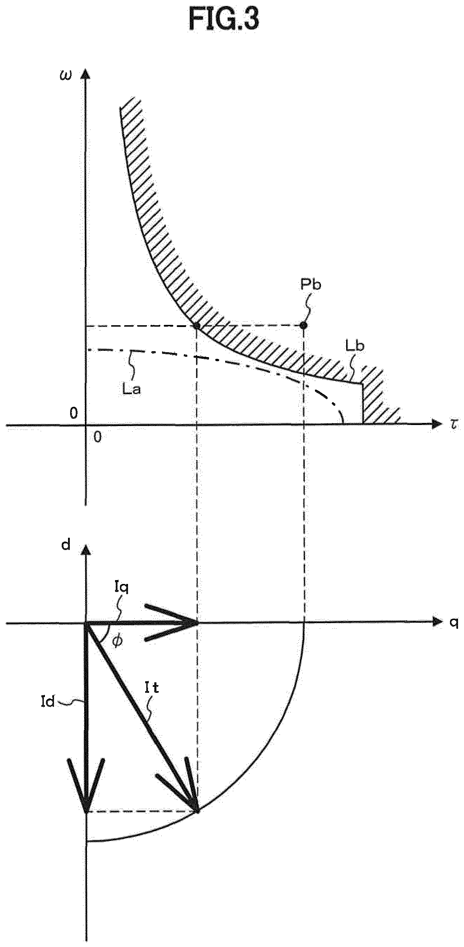

The moderate field current control will be described using FIG. 3. The upper part of FIG. 3 is a characteristic chart showing the relationship between the torque τ and rotation speed ω, in which the torque τ is plotted as abscissa and the rotation speed ω is plotted as ordinate. The characteristic La indicated by the dash-dot line in the figure presents the maximum acceptable frequency range of the stepping motor 32 when the moderate field current control is not executed. More specifically, the characteristic La appears when the rated current is applied to a two-phase (phases A and B) motor for full-step driving. As shown by the characteristic La, the stepping motor 32 has the torque significantly diminished in a high rotation speed range.

The moderate field compensator 216 presets a moderate field compensating output range. The moderate field compensating output range is the hatched range on the right of the solid line Lb in FIG. 3. The solid line Lb is defined using an inversely proportional line giving a constant motor output. The moderate field compensator 216 executes the moderate field current control when the target motor output value Pt is within the moderate field compensating output range. When the target motor output value Pt is outside the moderate field compensating output range, the moderate field compensator 216 drives the stepping motor 32 according to its intrinsic characteristic La.

More specifically, the moderate field compensator 216 obtains a motor output constant Pm defining the solid line Lb in advance. The constant Pm is calculated by an equation: Pm = K x ωs x I in advance, in which K is the torque constant (Nm/A), ωs is the boundary rotation speed (rad/sec), and I is the rated current (A). The values K, ωs, and I are intrinsic to the stepping motor 32. The moderate field compensator 216 calculates a target motor output value Pt based on an equation: Pt = K x ω x It. When the target value Pt exceeds the constant Pm, the moderate field compensator 216 executes the moderate field current control. When the target value Pt is equal to or lower than the constant Pm, the moderate field compensator 216 does not execute the moderate field current control.

In the case of executing the moderate field current control, the moderate field compensator 216 calculates a phase ϕ based on an equation: ϕ = cos⁻¹ (Pm/Pt). The moderate field compensator 216 calculates a d-axis current Id based on an equation: Id = It x sin ϕ. The moderate field compensator 216 calculates a q-axis current Iq based on an equation: Iq = It x cos ϕ.

For example, when the target motor output value Pt is indicated by a point Pb in FIG. 3, the point Pb is within the moderate field compensating output range; therefore, the moderate field compensator 216 executes the moderate field current control. In such a case, the currents It, Id and Iq have the relationship shown in the lower part of FIG. 3. The d-axis current Id is the moderate field current. Having a negative value as shown in the lower part of FIG. 3, the current Id acts to cancel the influence of back electromotive force.

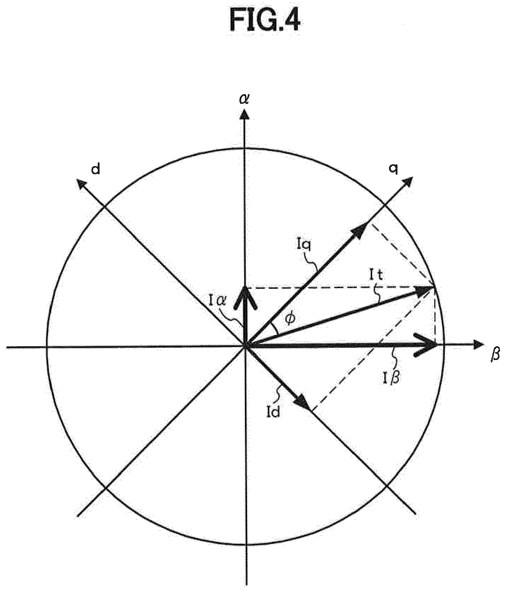

Returning to FIG. 2, the coordinate transformer 217 transforms the currents Id and Iq on the rotating coordinate system output from the moderate field compensator 216 to currents Iα and Iβ on the coordinate system at rest. FIG. 4 shows a specific example of the transformation. The coordinate transformer 217 outputs signals indicating the currents Iα and Iβ to the current controllers 23 and 24.

The boost command processing part 218 determines whether to boost the motor power supply voltage applied to the stepping motor 32 based on the target rotation speed value ωt output from the position controller 213. In the case of boosting, the boost command processing part 218 determines the motor power supply voltage after boosted ("the boosted voltage," hereafter). The boost command processing part 218 outputs signals indicating these determination results to the booster circuit 22.

The booster circuit 22 boosts the control device power supply voltage applied from outside the control device 20 to yield the motor power supply voltage of the stepping motor 32. The control device power supply voltage is, for example, a DC current of 24 V. The booster circuit 22 applies the motor power supply voltage to the PWM inverter 25.

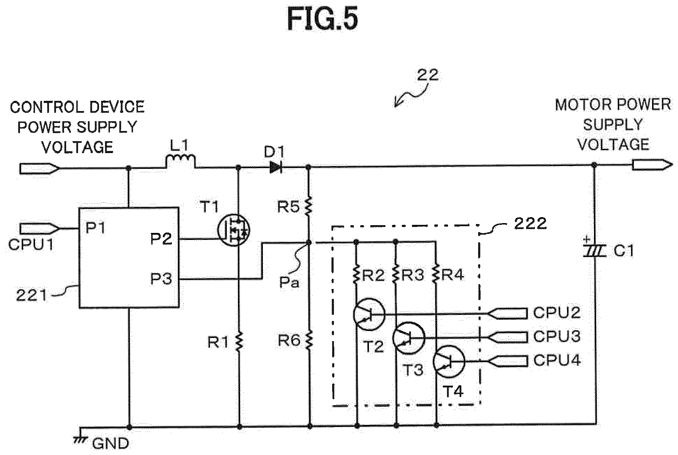

FIG. 5 is a circuit diagram showing the booster circuit 22. As shown in FIG. 5, the booster circuit 22 is composed of a DC/DC controller 221, a coil L1, a diode D1, a transistor T1, resistors R1, R5, and R6, a boosted voltage adjusting part 222, and a capacitor C1.

The DC/DC controller 221, coil L1, diode D1, transistor T1, resistors R1, R5, and R6, and capacitor C1 constitute a basic circuit as a voltage-boosting circuit. When the DC/DC controller 221 turns on the gate voltage applied to the transistor T1 from an output port P2, the coil L1 accumulates energy. When the gate voltage applied to the transistor T1 is turned off, the energy accumulated in the coil L1 is released as a component of the motor power supply voltage. The DC/DC controller 221 repeatedly turns on/off the gate voltage so as to boost the motor power supply voltage to a voltage higher in value than the control device power supply voltage.

The DC/DC controller 221 determines whether to boost according to a signal CPU1 input to an input port P1 from the boost command processing part 218. When the voltage applied to the input port P1 is on, the DC/DC controller 221 repeatedly turns on/off the gate voltage. Consequently, the DC/DC controller 221 boosts the motor power supply voltage. When the voltage applied to the input port P1 is off, the DC/DC controller 221 does not boost the motor power supply voltage. In such a case, the motor power supply voltage is equal to the control device power supply voltage, which is 24 V.

When the motor power supply voltage is boosted, the DC/DC controller 221 adjusts the timing of turning on/off the gate voltage. Consequently, the voltage at a point Pa acquired via an input port P3 is kept constant and the boosted voltage is kept having a given voltage value.

The boosted voltage adjusting part 222 is composed of resistors R2 to R4 and transistors T2 to T4. The boosted voltage adjusting part 222 energizes the resistors R2 to R4 in accordance with signals CPU2 to CPU 4 output from the boost command processing part 218. When the signals CPU2 to CPU 4 are on, on, and off, respectively, the boosted voltage adjusting part 222 energizes the resistors R2 and R3 and does not energize the resistor R4. Consequently, the ratio between the boosted voltage and the voltage at the point Pa changes according to the resistance values of the resistors R2 to R4 and whether the signals CPU2 to CPU4 are on/off. Since the voltage at the point Pa is constant, the boosted voltage has a voltage value corresponding to the changed ratio. The boosted voltage adjusting part 222 boosts the motor power supply voltage to eight different voltages, 26V, 28V, ..., and 40V, according to the signals CPU2 to CPU4. The boosted voltage can be set to any values by changing the resistance values of the resistors R2 to R4, R5, and R6.

Returning to FIG. 2, the current controller 23 outputs a control signal to the PWM inverter 25 so as to keep the amount of current of the phase A signal output from the PWM inverter 25 at the current Iα. The current controller 23 acquires the detected current amount value from the current detector 26 to stabilize the amount of current output from the PWM inverter 25.

Like the current controller 23, the current controller 24 acquires the detected current amount value from the current detector 27 to keep the amount of current of the phase B signal output from the PWM inverter 25 at the current Iβ.

The PWM inverter 25 outputs pulse signals of the phases A and B to the stepping motor 32 as drive signals for driving the stepping motor. The amounts of currents of the pulse signals of the phases A and B are kept at the currents Iα and Iβ, respectively, by the current controllers 23 and 24. The voltage of pulse signals of the phases A and B is the motor power supply voltage supplied from the booster circuit 22.

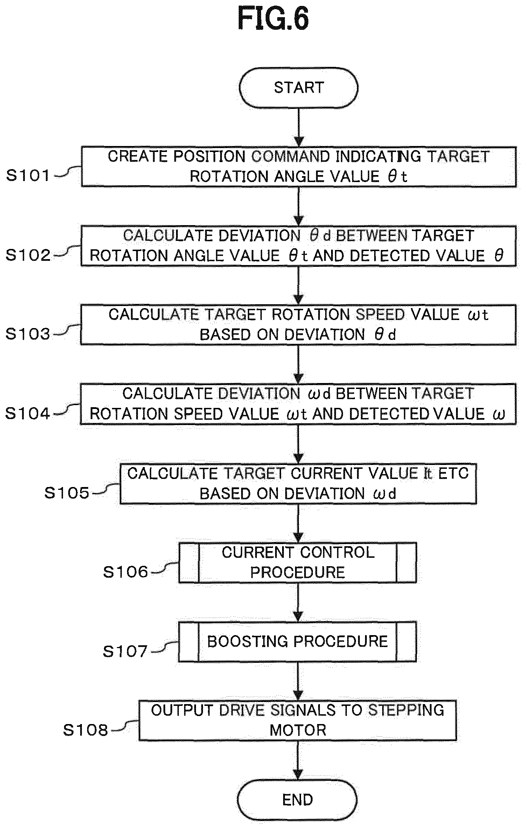

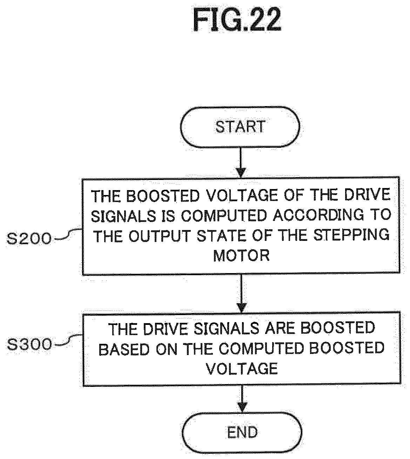

The procedure executed by the control device 20 will be described using FIG. 6. The control device 20 has a method reffered at Fig. 22 of controlling the boosted voltage of drive signals for driving a stepping motor 32, wherein the boosted voltage of the drive signals is computed according to the output state of the stepping motor (Step S200) and the drive signals are boosted based on the computed boosted voltage (Step S300).

The position command creation part 211 creates a position command indicating a target rotation angle value θt (Step S101). The first subtracter 212 calculates the deviation θd between the target rotation angle value θt and detected value θ (Step S102). The position controller 213 calculates a target rotation speed value ωt based on the deviation θd (Step S103). The second subtracter 214 calculates the deviation ωd between the target rotation speed value ωt and detected value ω (Step S104). The speed controller 215 calculates a target current value It and the like based on the rotation speed deviation ωd (Step S105).

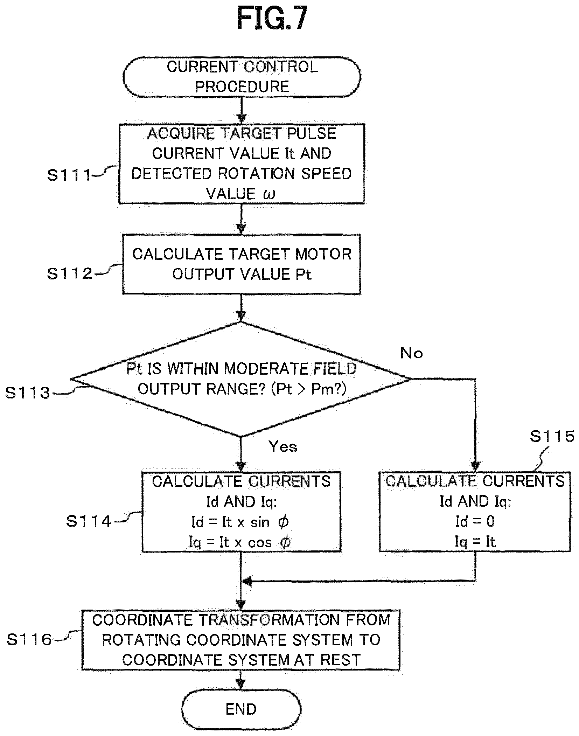

The moderate field compensator 216 and coordinate transformer 217 execute a current control procedure (Step S106). The current control procedure will be described using FIG. 7.

The moderate field compensator 216 acquires the target pulse current value It and detected rotation speed value ω (Step S111).

The moderate field compensator 216 calculates a target motor output value Pt based on the target value It and detected value ω (Step S 112).

The moderate field compensator 216 compares the calculated target value Pt with a preset constant Pm to determine whether the target value Pt is within the moderate field compensating output range (Step S113).

If the target value Pt is within the moderate field compensating output range (Step S113; Yes), the moderate field compensator 216 executes the moderate field current control. The moderate field compensator 216 calculates the currents Id and Iq including moderate field current components (Step S114).

If the target value Pt is not within the moderate field compensating output range (Step S113; No), the moderate field compensator 216 calculates the currents Id and Iq excluding moderate field current components (Step S115). The moderate field compensator 216 sets the current Id to zero and the current Iq to a current of the same amount as the current It.

The coordinate transformer 217 transforms the currents Id and Iq on a rotating coordinate system to the currents Iα and Iβ on the coordinate system at rest (Step S116).

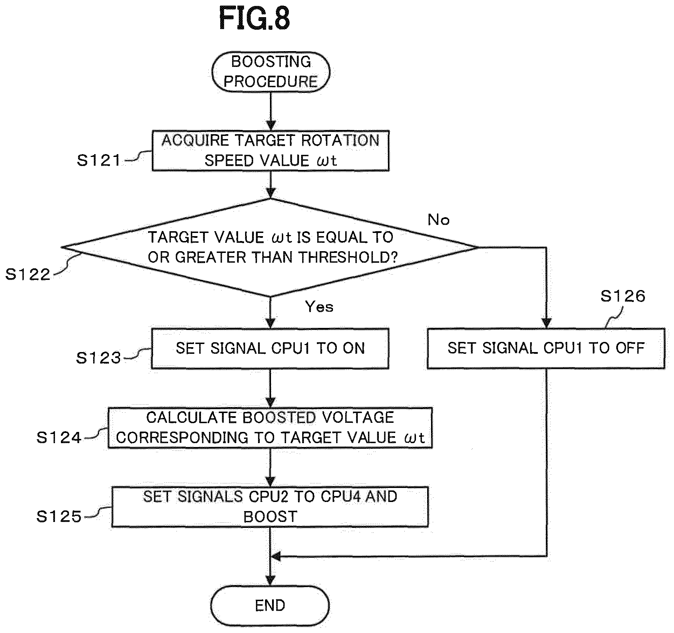

Returning to FIG. 6, following the current control procedure in the Step S106, the boost command processing part 218 and booster circuit 22 execute a boosting procedure (Step S107). The boosting procedure will be described using FIG. 8.

The boost command processing part 218 acquires the target rotation speed value ωt from the position controller 213 (Step 121).

The boost command processing part 218 determines whether the target rotation speed value ωt is equal to or greater than a given threshold (Step S122). The given threshold is, for example, 400 rpm.

If the target value ωt is equal to or greater than a given threshold (Step S122; Yes), the boost command processing part 218 sets the voltage of the signal CPU1 to on (Step S123).

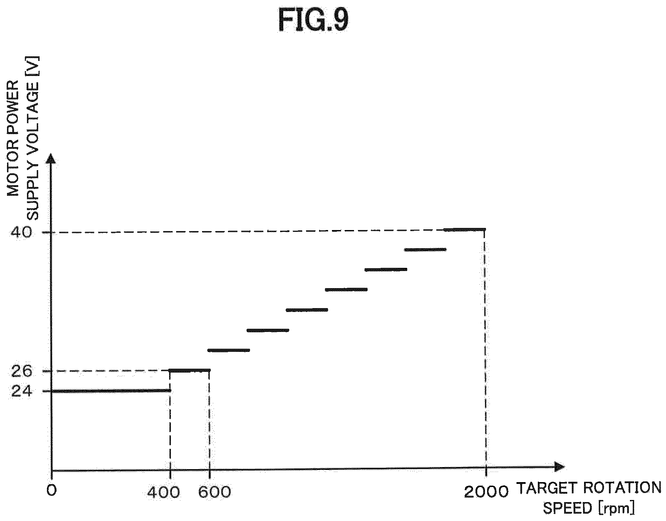

The boost command processing part 218 calculates a boosted voltage corresponding to the target rotation speed value ωt of the stepping motor 32 (Step S124). The boost command processing part 218 divides the range equal to or greater than the given threshold within the rated rotation speed range into eight ranges as shown in FIG. 9. The rated rotation speed range is, for example, 0 to 2000 rpm. More specifically, the motor power supply voltage of the stepping motor 32 is set to a voltage raised in a stepwise fashion in proportion to increase in the rotation speed of the stepping motor 32. The boost command processing part 218 selects a given boosted voltage corresponding to the range including the target value ωt among the multiple motor power supply voltages. For example, if the target value ωt is within a range of 400 to 600 rpm, the boost command processing part 218 selects 26 volts as the motor power supply voltage of the stepping motor 32. Here, the boost command processing part 218 divides the rotation speed range into equal ranges and sets the boosted voltages at equal intervals as shown in FIG. 9. However, the divided ranges and boosted voltages can be set on an arbitrary basis.

The boost command processing part 218 sets the signals CPU 2 to CPU4 to on/off according to the calculated boosted voltage. Consequently, the booster circuit 22 boosts the motor power supply voltage to a given voltage (Step S125).

If the target value ωt is not equal to or greater than a given threshold in Step S122 (Step S122; No), the boost command processing part 218 sets the signal CPU1 to off (Step S126). In such a case, the booster circuit 22 does not boost the motor power supply voltage.

Returning to FIG. 6, the PWM inverter 25 outputs drive signals to drive the stepping motor 32 (Step S108).

As described above, in this embodiment, the boost command processing part 218 computes the motor power supply voltage of the stepping motor 32 based on the target rotation speed value ωt of the stepping motor 32. Influence of the back electromotive force occurring as the stepping motor 32 rotates is suppressed by raising the motor power supply voltage. Consequently, diminution in the torque of the stepping motor 32 in a high rotation speed range can be prevented.

The boost command processing part 218 changes the boosted voltage according to the target rotation speed value ωt. Here, it is possible that the boost command processing part 218 computes the motor power supply voltage of the stepping motor 32 when the target value ωt exceeds a given threshold, and does not compute it when the target value ωt is lower than the given threshold. In this way, diminution in the torque of the stepping motor 32 in a high rotation speed range can be prevented without consuming extra power.

The boost command processing part 218 determines the boosted voltage by executing programs. In other words, the boost command processing part 218 can change the boosted voltage corresponding to the target rotation speed value ωt on an arbitrary basis. Fine adjustment on the boosted voltage leads to efficient suppression of influence of the back electromotive force.

As the boost command processing part 218 turns on/off the signals CPU2 to CPU4, the booster circuit 22 boosts the motor power supply voltage. Consequently, the booster circuit 22 can be a simple discrete circuit.

The moderate field compensator 216 executes the moderate field current control in a range exceeding the maximum acceptable frequency range of the stepping motor 32 so as to further suppress influence of the back electromotive force compared with when only the boosting procedure is executed.

### (Embodiment 2)

Embodiment 2 will be described with the focus on the difference from the above-described Embodiment 1. The same components as those in Embodiment 1 will be referred to by the same reference numbers and duplicate explanation of Embodiment 1 will be omitted.

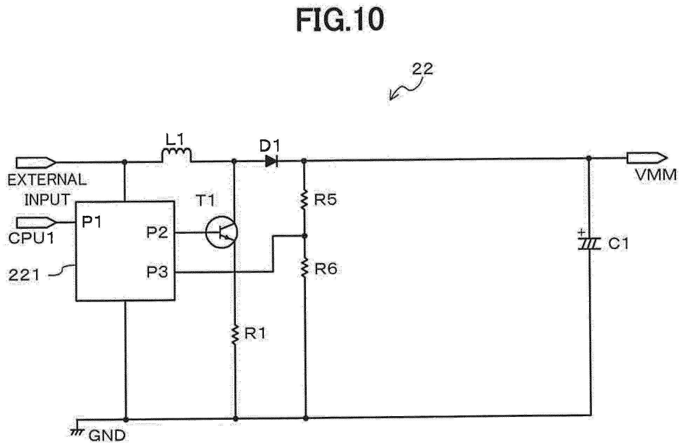

FIG. 10 is a circuit diagram showing a booster circuit 22 according to Embodiment 2. As shown in FIG. 10, the booster circuit 22 is composed of a DC/DC controller 221, a coil L1, a diode D1, a transistor T1, resistors R1, R5, and R6, and a capacitor C1. The DC/DC controller 221 determines whether to boost the motor power supply voltage according to the signal CPU1 input to the input port P1 from the boost command processing part 218.

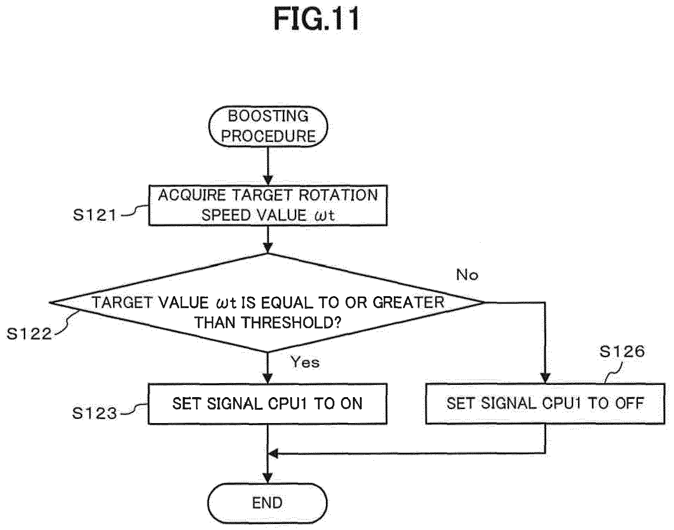

The boosting procedure executed by the boost command processing part 218 and booster circuit 22 will be described using FIG. 11.

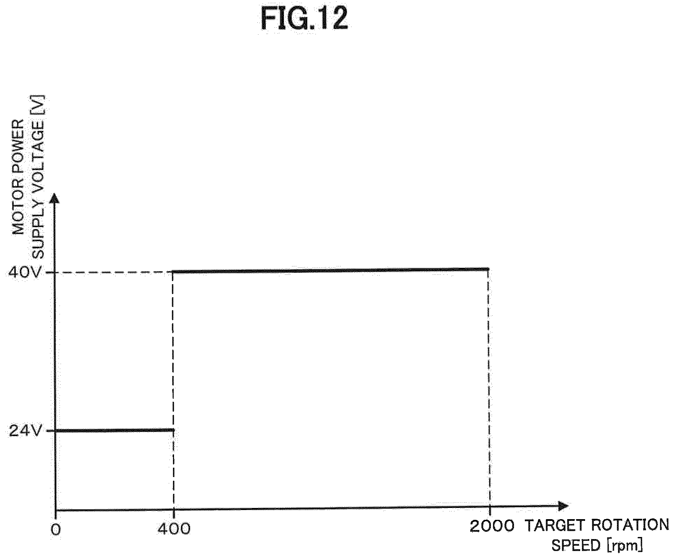

In Steps S121 to S123, the same processing as in Embodiment 1 is executed. The boost command processing part 218 ends the boosting procedure without calculating the boosted voltage after the Step S123. If the determination is negative in Step S122 (Step S122; No), the same processing as in Embodiment 1 is executed in and after Step S126. Consequently, the booster circuit 22 boosts the motor power supply voltage according to the rotation speed as shown in FIG. 12.

As described above, the booster circuit 22 according to this embodiment does not have a mechanism to adjust the boosted voltage. If the target value ωt is equal to or greater than a given threshold, the booster circuit 22 boosts the motor power supply voltage of the stepping motor 32 to a preset voltage. Consequently, the booster circuit 22 can have a simple structure.

### (Embodiment 3)

Embodiment 3 will be described with the focus on the difference from the above-described Embodiment 1. The same components as those in Embodiment 1 will be referred to by the same reference numbers and duplicate explanation of Embodiment 1 will be omitted.

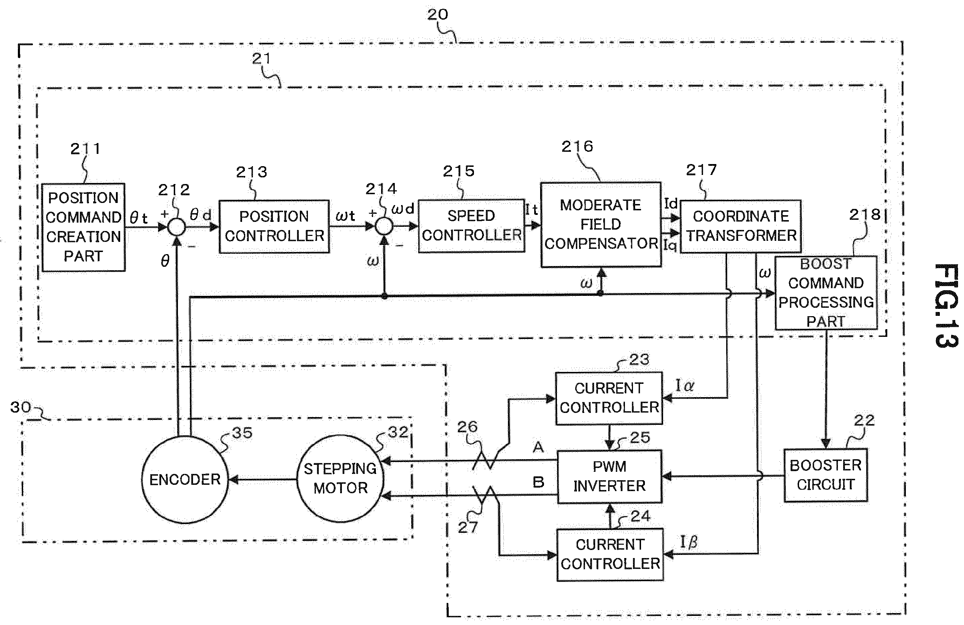

FIG. 13 is a block diagram of a control device and linear actuator constituting an actuator system according to Embodiment 3. As shown in FIG. 13, the boost command processing part 218 acquires the detected rotation speed value ω of the stepping motor 32 from the encoder 35. The boost command processing part 218 determines whether to boost based on the detected value ω. In the case of boosting, the boost command processing part 218 determines the boosted voltage. The boost command processing part 218 outputs signals indicating these determination results to the booster circuit 22.

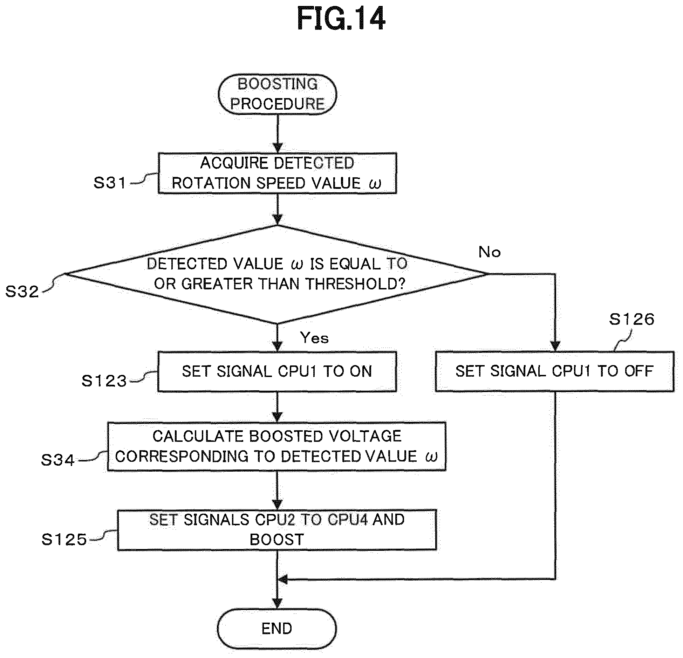

The boosting procedure executed by the boost command processing part 218 and booster circuit 22 will be described using FIG. 14.

The boost command processing part 218 acquires the detected rotation speed value ω from the encoder 35 (Step S31). The boost command processing part 218 determines whether the detected value ω is equal to or greater than a given threshold (Step S32).

If the detected value ω is equal to or greater than a given threshold (Step S32; Yes), the boost command processing part 218 sets the signal CPU1 to on as in Embodiment 1. The boost command processing part 218 calculates the boosted voltage corresponding to the detected value ω (Step S34). The correspondence between the detected value ω and boosted voltage is the same as that between the target value ωt and boosted voltage according to Embodiment 1 (see FIG. 9). The boost command processing part 218 sets the signals CPU2 to CPU4 to on/off as in Embodiment 1.

If the detected value ω is not equal to or greater than a given threshold (Step S32; No), the boost command processing part 218 executes the same processing as in Embodiment 1.

As described above, in this embodiment, the boost command processing part 218 computes the motor power supply voltage of the stepping motor 32 based on the detected rotation speed value ω of the stepping motor 32. Consequently, the control device 20 can apply a pulse voltage to the stepping motor 32 according to the actual rotation speed.

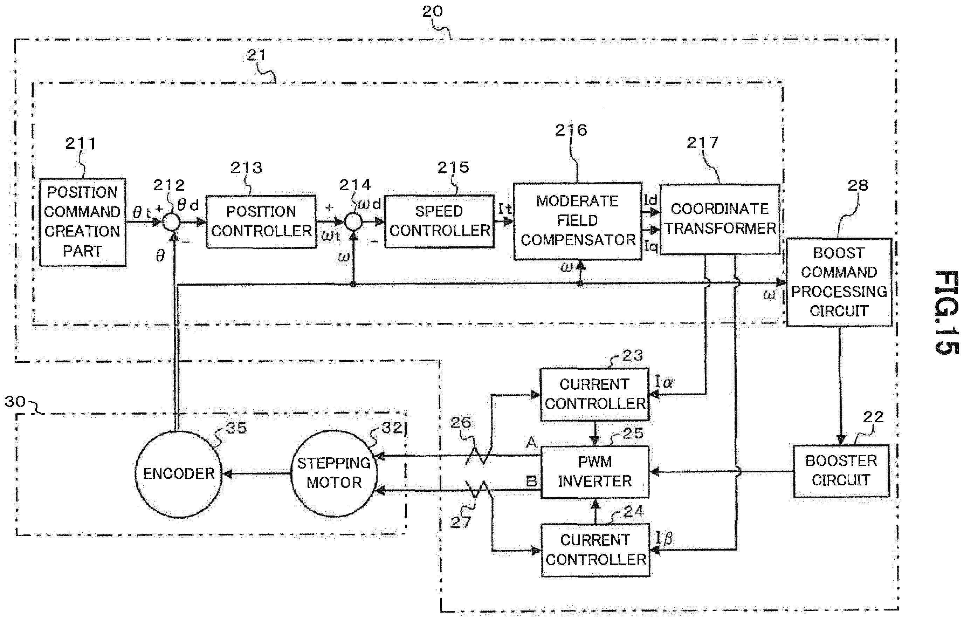

In this embodiment, the control device 20 has a mechanism to feed back the detected rotation speed value ω of the stepping motor 32. The feedback mechanism is realized by the arithmetic operation part 21 comprising the boost command processing part 218 and executing feedback control. However, this is not restrictive. For example, the control device 20, as FIG. 15 shown in can execute feedback control using a boost command processing circuit 28 composed of a discrete circuit. In such a case, the processing workload of the arithmetic operation part 21 can be reduced and the arithmetic operation part 21 can be composed of an inexpensive CPU or the like.

### (Embodiment 4)

Embodiment 4 will be described with the focus on the difference from the above-described Embodiment 1. The same components as those in Embodiment 1 will be referred to by the same reference numbers and duplicate explanation of Embodiment 1 will be omitted.

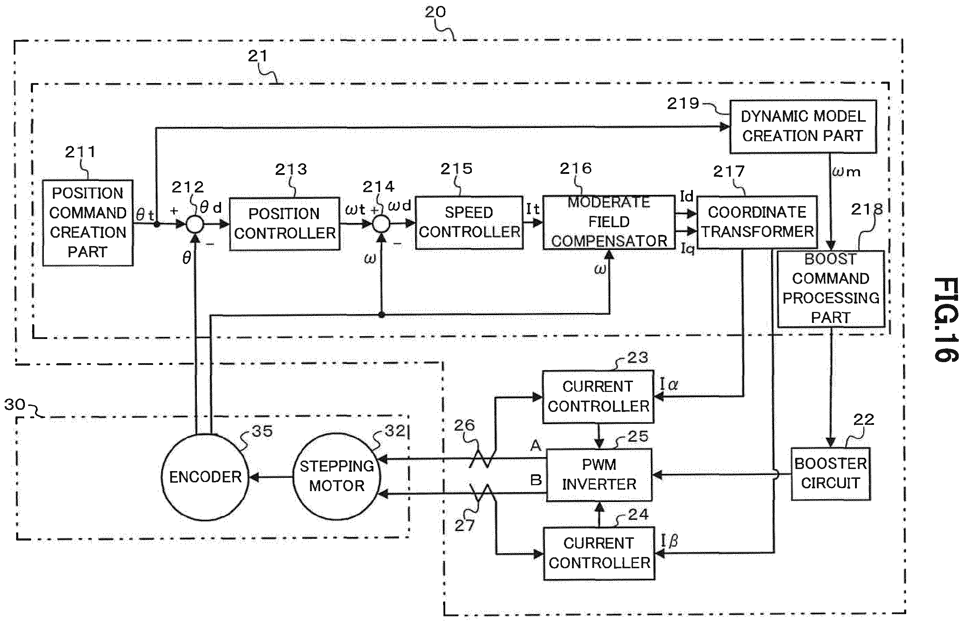

FIG. 16 is a block diagram of a control device and linear actuator constituting an actuator system according to Embodiment 4. As shown in FIG. 16, the arithmetic operation part 21 is composed of a position command creation part 211, a first subtracter 212, a position controller 213, a second subtracter 214, a speed controller 215, a moderate field compensator 216, a coordinate transformer 217, a boost command processing part 218, and a dynamic model creation part 219.

The dynamic model creation part 219 acquires a target rotation angle value θt and creates a dynamic model of the mechanical system including the stepping motor 32, ball screw 33, slider 34, etc. based on the target value θt. The dynamic model creation part 219 calculates the rotation speed com of the modeled stepping motor. The dynamic model creation part 219 outputs a signal indicating the rotation speed com to the boost command processing part 218. The created dynamic model can be a simplified model in which only the rotation speed of the stepping motor 32 is modeled.

The boost command processing part 218 acquires the modeled rotation speed com from the dynamic model creation part 219. The boost command processing part 218 determines whether to boost the motor power supply voltage based on the rotation speed com. In the case of boosting, the boost command processing part 218 determines the boosted voltage. The boost command processing part 218 outputs signals indicating these determination results to the booster circuit 22.

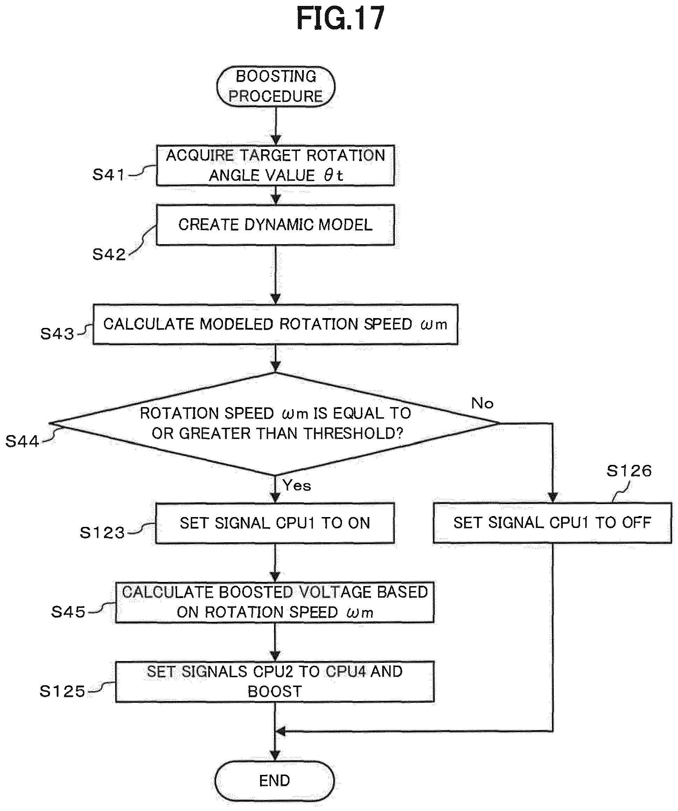

The boosting procedure executed by the dynamic model creation part 219, boost command processing part 218, and booster circuit 22 will be described using FIG. 17.

The dynamic model creation part 219 acquires a target rotation angle value θt from the position command creation part 211 (Step S41). The dynamic model creation part 219 creates a dynamic model based on the target value θt (Step S42). The dynamic model creation part 219 calculates the modeled rotation speed com (Step S43).

The boost command processing part 218 determines whether the rotation speed com is equal to or greater than a given threshold (Step S44). If the rotation speed com is equal to or greater than a given threshold (Step S44; Yes), the boost command processing part 218 sets the signal CPU1 to on as in Embodiment 1. The boost command processing part 218 calculates the boosted voltage based on the rotation speed com (Step S45). The correspondence between the rotation speed com and boosted voltage is the same as that between the target value ωt and boosted voltage according to Embodiment 1 (see FIG. 9). The boost command processing part 218 sets the CPU2 to CPU4 to on/off as in Embodiment 1. If the rotation speed com is not equal to or greater than a given threshold in Step S44 (Step S44; No), the boost command processing part 218 sets the CPU1 to off as in Embodiment 1 and ends the boosting procedure.

As described above, in this embodiment, the dynamic model creation part 219 predicts the rotation speed of the stepping motor 32 using a dynamic model of the mechanical system including the stepping motor 32. The boost command processing part 218 computes the motor power supply voltage of the stepping motor 32 based on the predicted rotation speed com. Consequently, the control device 20 can more efficiently compute the motor power supply voltage of the stepping motor. For example, if an accurate prediction model is created, the boost command processing part 218 and booster circuit 22 can properly boost the voltage while predicting the rotation speed of the stepping motor 32. If a model is created by acquiring the history of usage of the control device 20 and linear actuator 30, boosting suitable for a device deteriorating with time can be executed.

### (Embodiment 5)

Embodiment 5 will be described with the focus on the difference from the above-described Embodiment 1. The same components as those in Embodiment 1 will be referred to by the same reference numbers and duplicate explanation of Embodiment 1 will be omitted.

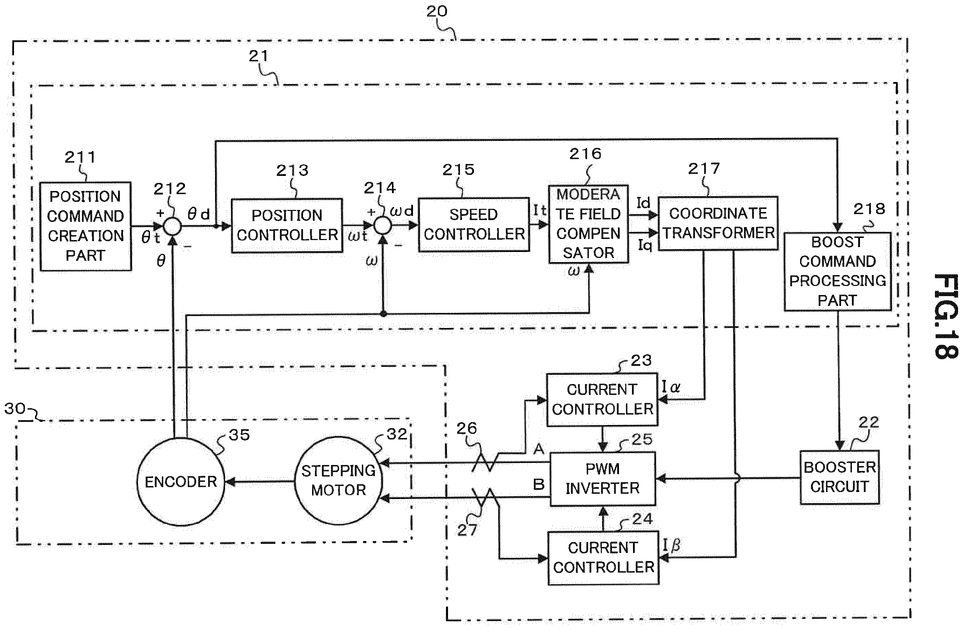

FIG. 18 is a block diagram of a control device and linear actuator constituting an actuator system according to this embodiment. As shown in FIG. 18, the boost command processing part 218 acquires the deviation θd between the target rotation angle θt of the stepping motor 32 and the detected rotation angle θ of the stepping motor 32 from the first subtracter 212. The deviation θd is a physical quantity corresponding to the rotation speed of the stepping motor 32.

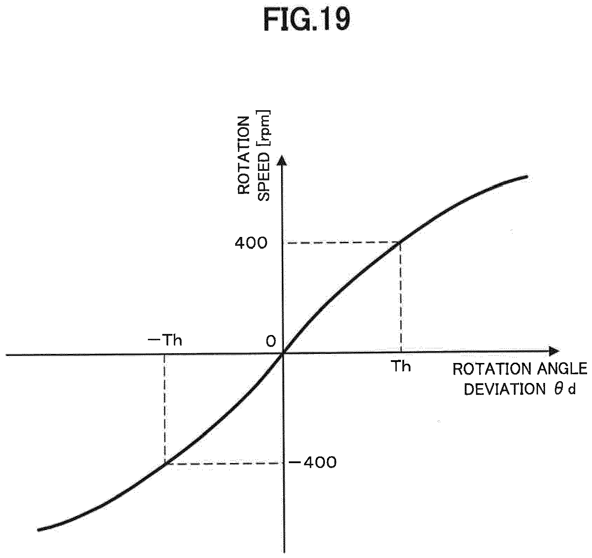

The relationship between the deviation θd and rotation speed will be described more specifically using FIG. 19. When the target rotation angle value θt of the stepping motor 32 is equal to the detected value θ, the stepping motor 32 does not need to rotate; therefore, the rotation speed is zero. If the deviation θd is zero, the rotation speed is zero. If the target rotation angle value θt of the stepping motor 32 is greater than the detected value θ, the rotation angle of the stepping motor 32 should be increased; therefore, the rotation speed is positive in value. If the deviation θd is positive in value, the rotation speed is positive in value. If the deviation θd is negative in value, the rotation speed is negative in value. As the absolute value of the deviation θd is increased, the absolute value of the rotation speed is increased.

Returning to FIG. 18, the boost command processing part 218 determines whether to boost the motor power supply voltage based on the deviation θd. In the case of boosting, the boost command processing part 218 determines the boosted voltage. The boost command processing part 218 outputs signals indicating these determination results to the booster circuit 22.

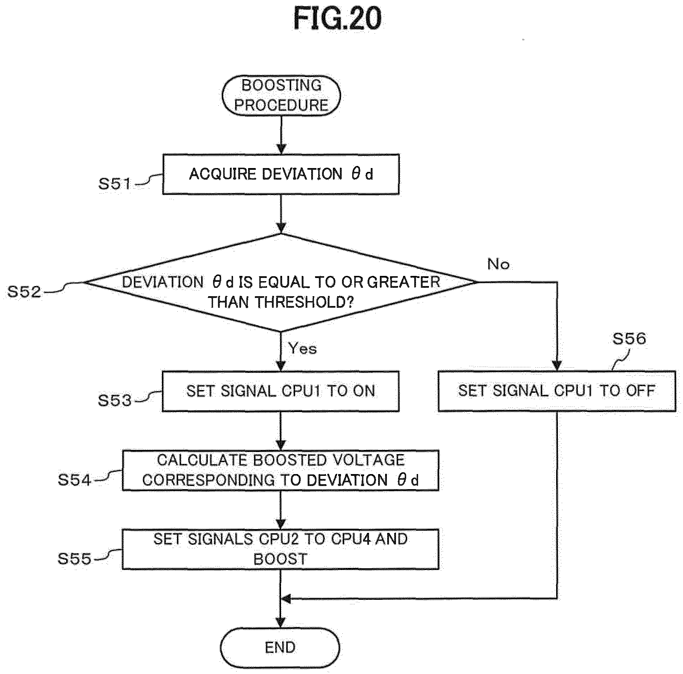

The procedure executed by the boost command processing part 218 and booster circuit 22 will be described using FIG. 20.

The boost command processing part 218 acquires the deviation θd from the first subtracter 212 (Step S51).

The boost command processing part 218 determines whether the absolute value of the deviation θd is equal to or greater than a given threshold (Step S52). The given threshold is, for example, a value Th corresponding to a rotation speed of 400 rpm in FIG. 19.

If the absolute value of the deviation θd is equal to or greater than a given threshold Th (Step S52; Yes), the boost command processing part 218 sets the signal CPU1 to on (Step S53).

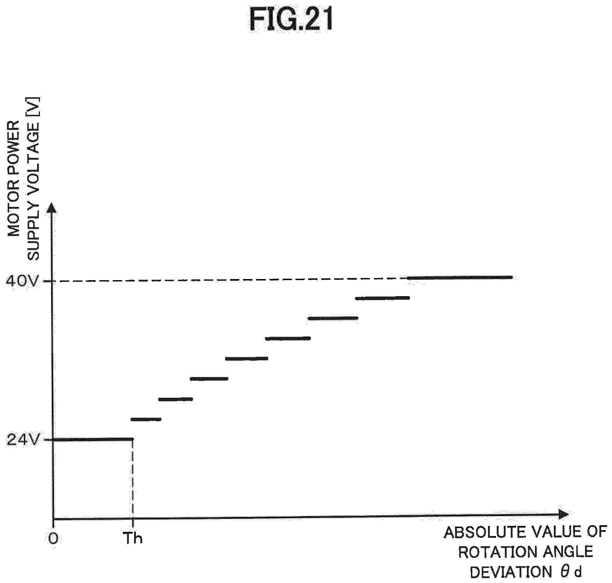

The boost command processing part 218 calculates the boosted voltage corresponding to the absolute value of the deviation θd (Step S54). The boost command processing part 218 divides the range equal to and greater than the threshold Th into eight ranges as shown in FIG. 21. More specifically, the motor power supply voltage of the stepping motor 32 is set to a voltage raised in a stepwise fashion in proportion to increase in the deviation θd. The boost command processing part 218 selects a given boosted voltage corresponding to the range including the absolute value of the deviation θd among the multiple motor power supply voltages.

The boost command processing part 218 sets the signals CPU2 to CPU4 to on/off according to the selected boosted voltage. Consequently, the booster circuit 22 boosts the motor power supply voltage to a given voltage (Step S55).

If the absolute value of the deviation θd is not equal to or greater than a given threshold Th in Step S52 (Step S52; No), the boost command processing part 218 sets the signal CPU1 to off (Step S56). In such a case, the booster circuit 22 does not boost the motor power supply voltage.

As described above, in this embodiment, the boost command processing part 218 computes the motor power supply voltage of the stepping motor based on the deviation θd between the target rotation angle value of the stepping motor 32 and the detected rotation angle value of the stepping motor 32 without computing the rotation speed. Consequently, the control device 20 can execute the boosting procedure at a higher speed.

Embodiments 1 to 5 are described above. The present invention is not confined to the above embodiments.

In the above-described embodiments, the position command creation part 211 creates the target rotation angle value θt. However, it can create a target position value of the slider 34 on the X-axis instead of the rotation angle. Furthermore, the linear actuator 30 comprises a rotary encoder as the encoder 35. However, it can comprise a linear encoder detecting the position of the slider 34.

In the above-described embodiments, the boosted voltage adjusting part 222 comprises the transistors T2 to T4. However, it can comprise four or more transistors. In other words, the number of ranges over which the boosting procedure is executed within the rated rotation speed range can be increased. In such a case, the boosted voltage can be set more gradually in accordance with the rotation speed; then, efficient boosting can be realized.

The boosted voltage adjusting part 222 can comprise two or less transistor. In other words, the number of ranges over which the boosting procedure is executed within the rated rotation speed range can be reduced. In such a case, the boosted voltage adjusting part 222 can have a simple structure.

In the above-described embodiments, the stepping motor 32 is the drive source of a linear actuator 30. However, the control device 20 can supply pulse power to a stepping motor of some other device.

In the above-described embodiments, the speed controller 215 calculates the target pulse current value It based on the rotation speed deviation ωd. However, it can calculate a target value It based only on the target rotation speed value ωt.

In the above-described embodiments, the moderate field compensator 216 calculates the target motor output value Pt based on the detected rotation speed value ω. However, it can be calculated based on the target value ωt. More specifically, the moderate field compensator 216 can calculate the target value Pt based on an equation: Pt = K x ωt x It.

In the above-described embodiments, the moderate field compensating output range is defined using the motor output constant Pm. However, it can be any range. The moderate field compensating output range is a range exceeding and not overlapping with the maximum acceptable frequency range of the stepping motor 32 as shown in FIG. 3. However, this is not restrictive. The moderate field compensating output range can partially overlap with the maximum acceptable frequency range so as to efficiently execute the moderate field current control.

In the above-described embodiments, the control device 20 sets the motor power supply voltage according to the rotation state of the stepping motor 32. More specifically, the motor power supply voltage is computed by the boost command processing part 218 according to the rotation speed ωt or ω in Embodiments 1 to 3, by the dynamic model creation part 219 and boost command processing part 218 according to the rotation angle θt in Embodiment 4, and by the boost command processing part 218 according to the deviation θd in Embodiment 5. This is not restrictive. The control device 20 can compute the motor power supply voltage according to, for example, the rotation state including the angular acceleration.

In the above-described embodiments, for easier understanding, the boost command processing part 218 sets the signals CPU2 to CPU4 after the boosted voltage is calculated. This is not restrictive. The boost command processing part 218 in Embodiment 1 can directly set the signals CPU2 to CPU4 to on/off based on the target rotation speed value ωt. In such a case, the processing to calculate the boosted voltage is eliminated and the boosted voltage can be adjusted at a higher speed.

Various embodiments and modifications are available for the present invention without departing from the broad range of spirit and scope of the present invention. The above embodiments are given for explaining the present invention and do not confine the scope of the present invention.

## Claims

1. A control device (20) for controlling a stepping motor (32), comprising:
a driver (50) supplying to the stepping motor (32) drive signals for driving said stepping motor (32);
a dynamic model creator (219) calculating a rotation speed of said stepping motor (32) based on a prediction by a dynamic model of a mechanical system including said stepping motor (32), the dynamic model being created from a history of usage of the control device (20) or the stepping motor (32);
an arithmetic operator (21) computing a boosted voltage of said drive signals based on the rotation speed of said stepping motor (32) that is calculated by said dynamic model creator (219; and
a booster (22) boosting said drive signals based on the boosted voltage computed by said arithmetic operator (21).

2. The control device (20) according to claim 1, **characterized in that** said arithmetic operator (21) designates a voltage selected from multiple voltages raised in a stepwise fashion in proportion to increase in the rotation speed of said stepping motor (32) as a boosted voltage of said drive signals.

3. The control device (20) according to claim 1 or 2, **characterized in that** said arithmetic operator (21) computes the boosted voltage of said drive signals when an output state of said stepping motor (32) exceeds a given threshold.

4. The control device (20) according to any one of claims 1 to 3, **characterized in that** said booster boosts said drive signals to a preset voltage.

5. The control device (20) according to any one of claims 1 to 4, **characterized by** comprising a moderate field controller executing control to moderate a field current of said drive signals in a range exceeding a maximum acceptable frequency range of said stepping motor (32).

6. An actuator system (10), **characterized by** comprising a stepping motor (32) and the control device (20) according to any one of claim 1 to 5 and controlling said stepping motor.

7. A control method executed by a control device (20) for controlling a stepping motor (32), the control method comprising:
calculating a rotation speed of said stepping motor (32) based on a prediction by a dynamic model of a mechanical system including said stepping motor (32), the dynamic model being created from a history of usage of the control device (20) or the stepping motor (32);
computing (S200) a boosted voltage of drive signals for driving the stepping motor (32), based on the calculated rotation speed of said stepping motor (32); and
boosting (S300) a voltage of the drive signals based on the computed boosted voltage.

## Patentansprüche

1. Steuervorrichtung (20) zum Steuern eines Schrittmotors (32), umfassend:
einen Treiber (50), der den Schrittmotor (32) mit Antriebssignalen zum Antreiben dieses Schrittmotors (32) versorgt;
einen Dynamikmodellersteller (219), der eine Drehzahl des Schrittmotors (32) basierend auf einer Vorhersage durch ein dynamisches Modell eines mechanischen Systems, das diesen Schrittmotor (32) umfasst, berechnet, wobei das dynamische Modell anhand einer Verwendungshistorie der Steuervorrichtung (20) oder des Schrittmotors (32) erstellt wird;
einen arithmetischen Operator (21), der eine verstärkte Spannung des Antriebssignals auf der Grundlage der Drehzahl des Schrittmotors (32) errechnet, die durch den Dynamikmodellersteller (219) berechnet wird; und
einen Verstärker (22), der die Antriebssignale auf der Grundlage der von dem arithmetischen Operator (21) errechneten verstärkten Spannung verstärkt.

2. Steuervorrichtung (20) nach Anspruch 1, **dadurch gekennzeichnet, dass** der arithmetische Operator (21) eine Spannung, die aus einer Vielzahl von im Verhältnis zu einer Erhöhung der Drehzahl des Schrittmotors (32) stufenweise erhöhten Spannungen ausgewählt wird, als verstärkte Spannung der Antriebssignale bestimmt.

3. Steuervorrichtung (20) nach Anspruch 1 oder 2, **dadurch gekennzeichnet, dass** der arithmetische Operator (21) die verstärkte Spannung der Antriebssignale errechnet, wenn ein Ausgangszustand des Schrittmotors (32) einen gegebenen Schwellenwert überschreitet.

4. Steuervorrichtung (20) nach einem der Ansprüche 1 bis 3, **dadurch gekennzeichnet, dass** der Verstärker die Antriebssignale auf eine voreingestellte Spannung verstärkt.

5. Steuervorrichtung (20) nach einem der Ansprüche 1 bis 4, **dadurch gekennzeichnet, dass** sie einen Abschwächfeldregler umfasst, der eine Regelung ausführt, um einen Feldstrom der Antriebssignale in einem Bereich abzuschwächen, der über einen maximal zulässigen Frequenzbereich des Schrittmotors (32) hinausgeht.

6. Aktuatorsystem (10), **dadurch gekennzeichnet, dass** es einen Schrittmotor (32) und die Steuervorrichtung (20) nach einem der Ansprüche 1 bis 5 umfasst und den Schrittmotor steuert.

7. Steuerverfahren, das von einer Steuervorrichtung (20) zum Steuern eines Schrittmotors (32) ausgeführt wird, wobei das Steuerverfahren Folgendes umfasst:
Berechnen einer Drehzahl des Schrittmotors (32) basierend auf einer Vorhersage durch ein dynamisches Modell eines mechanischen Systems, das diesen Schrittmotor (32) umfasst, wobei das dynamische Modell anhand einer Verwendungshistorie der Steuervorrichtung (20) oder des Schrittmotors (32) erstellt wird;
Errechnen (S200) einer verstärkten Spannung von Antriebssignalen zum Antreiben des Schrittmotors (32) auf der Grundlage der berechneten Drehzahl dieses Schrittmotors (32); und
Verstärken (S300) einer Spannung der Antriebssignale auf der Grundlage der errechneten verstärkten Spannung.

## Revendications

1. Dispositif de commande (20) pour commander un moteur pas-à-pas (32), comprenant :
un dispositif d'entraînement (50) fournissant au moteur pas-à-pas (32) des signaux d'entraînement pour entraîner ledit moteur pas-à-pas (32) ;
un créateur de modèle dynamique (219) calculant une vitesse de rotation dudit moteur pas-à-pas (32) sur la base d'une prédiction par un modèle dynamique d'un système mécanique comportant ledit moteur pas-à-pas (32), le modèle dynamique étant créé à partir d'un historique d'utilisation du dispositif de commande (20) ou du moteur pas-à-pas (32) ;
un opérateur arithmétique (21) calculant une tension amplifiée desdits signaux d'entraînement sur la base de la vitesse de rotation dudit moteur pas-à-pas (32) qui est calculée par ledit créateur de modèle dynamique (219) ; et
un amplificateur (22) amplifiant lesdits signaux d'entraînement sur la base de la tension amplifiée calculée par ledit opérateur arithmétique (21).

2. Dispositif de commande (20) selon la revendication 1, **caractérisé en ce que** ledit opérateur arithmétique (21) désigne une tension sélectionnée parmi de multiples tensions élevées d'une manière pas à pas de façon proportionnelle pour augmenter la vitesse de rotation dudit moteur pas-à-pas (32) en tant que tension amplifiée desdits signaux d'entraînement.

3. Dispositif de commande (20) selon la revendication 1 ou 2, **caractérisé en ce que** ledit opérateur arithmétique (21) calcule la tension amplifiée desdits signaux d'entraînement lorsqu'un état de sortie dudit moteur pas-à-pas (32) dépasse un seuil donné.

4. Dispositif de commande (20) selon l'une quelconque des revendications 1 à 3, **caractérisé en ce que** ledit amplificateur amplifie lesdits signaux d'entraînement à une tension prédéfinie.

5. Dispositif de commande (20) selon l'une quelconque des revendications 1 à 4, **caractérisé en ce qu'**il comprend un dispositif de commande de champ modéré exécutant une commande pour modérer un courant de champ desdits signaux d'entraînement dans une plage dépassant une plage de fréquences maximales acceptables dudit moteur pas-à-pas (32).

6. Système d'actionneur (10), **caractérisé en ce qu'**il comprend un moteur pas-à-pas (32) et le dispositif de commande (20) selon l'une quelconque des revendications 1 à 5 et commandant ledit moteur pas-à-pas.

7. Procédé de commande exécuté par un dispositif de commande (20) pour commander un moteur pas-à-pas (32), le procédé de commande comprenant :
le calcul d'une vitesse de rotation dudit moteur pas-à-pas (32) sur la base d'une prédiction par un modèle dynamique d'un système mécanique comportant ledit moteur pas-à-pas (32), le modèle dynamique étant créé à partir d'un historique d'utilisation du dispositif de commande (20) ou du moteur pas-à-pas (32) ;
le calcul (S200) d'une tension amplifiée de signaux d'entraînement pour entraîner le moteur pas-à-pas (32), sur la base de la vitesse de rotation calculée dudit moteur pas-à-pas (32) ; et
l'amplification (S300) d'une tension des signaux d'entraînement sur la base de la tension amplifiée calculée.
